# EUROPEAN PATENT APPLICATION

(11) **EP 1 621 870 A2**
(43) Date of publication of application: **01.02.2006**
(21) Application number: 05254415.2
(22) Date of filing: 14.07.2005
(51) Int. Cl.: G01N 21/55, G01N 21/25

(54) **Multiplexed optical detection system**

(30) Priority: 29.07.2004 US 903934
(71) Applicant: Agilent Technologies, Inc., Palo Alto, CA 94306 (US)
(72) Inventor: Van Wiggeren, Gregory D., San Jose, California 95129 (US); Flower, Graham M., San Jose California 95127 (US); Baney, Douglas M., Los Altos, California 94024 (US); Roitman, Daniel B., California 94025 (US)
(74) Representative: Jehan, Robert

(57) **Abstract**

A multiplexed optical detector includes a set of optical sensors (S) coupled to a multiplexer (10) that maps subsets of the optical sensors to at least one multiplexed output provided by the multiplexer (10). The subsets of optical sensors are configurable according to addresses that are provided to the multiplexer.

## Description

The present invention relates to a multiplexed optical detection system.

Optical signals are detected in surface plasmon resonance (SPR) sensing and other optical measurement applications. In SPR sensing, intensity profiles associated with one or more received optical beams are established by detecting the intensities of optical beams as wavelengths of the optical beams are swept. The intensity profiles can then be used to detect and measure shifts in refractive indices that can indicate presence of biological analytes or biomolecular interactions within samples of an SPR sensor.

In some types of optical systems used in SPR sensing, resolution with which shifts in refractive indices can be measured increases with increases in the rate at which the intensities are detected. High measurement resolution is achieved in these systems when the rate at which the intensities are detected is high relative to the rate at which the wavelengths of the optical beams are swept.

Cameras that acquire images at video frame rates, for example sixty Hertz, can be used to detect the intensities of optical beams. However, when the wavelengths of the optical beams are swept at high speeds, the frame rate of the cameras is too low to achieve adequate measurement resolution for SPR sensing. Because image acquisitions involve processing detected signals from a large number of the optical sensors within the cameras, it is difficult to increase the rate of image acquisitions significantly beyond the video frame rate. Some types of cameras provide higher frame rates by reducing the number of optical sensors used to acquire images. These cameras typically restrict an image window to a single rectangular arrangement of optical sensors, thus limiting the ability of the camera to conform to the spatial arrangement of optical beams received by the camera. Accordingly, to achieve adequate measurement resolution in SPR sensing and other optical measurement applications, there is a need to detect the intensity of optical beams at a rate that is sufficiently higher than the frame rate of presently available cameras.

The present invention seeks to provide improved optical detection.

According to an aspect of the present invention there is provided a multiplexed optical detector as specified in claim 1.

According to another aspect of the present invention there is provided a multiplexed optical detector as specified in claim 9.

According to another aspect of the present invention there is provided an optical detection method as specified in claim 15.

A multiplexed optical detector according to embodiments of the present invention includes a set of optical sensors coupled to a multiplexer. The multiplexer maps subsets of the optical sensors to at least one multiplexed output provided by the multiplexer. The subsets of optical sensors are configurable according to addresses that are provided to the multiplexer. Intensity profiles of optical beams illuminating the multiplexed optical detector can be detected by processing multiplexed signals present at the multiplexed outputs.

Embodiments of the present invention are described below, by way of example only, with reference to the accompanying drawings, in which:
Figures 1A-1B show perspective views of multiplexed optical detectors according to embodiments of the present invention, wherein optical beams are incident on a set of optical sensors.
Figures 2A-2B show alternative sets of optical sensors suitable for inclusion in the multiplexed optical detector according to the embodiments of the present invention.
Figure 3 shows a block diagram of a multiplexed optical detector according to embodiments of the present invention.
Figures 4A-4B show exemplary multiplexed and demultiplexed signals associated with the multiplexed optical detector according to the embodiments of the present invention.
Figure 5 shows intensity profiles of optical beams intercepted by the multiplexed optical detectors according to embodiments of the present invention.
Figure 6 shows a flow diagram of a preselection method suitable for use in the multiplexed optical detector according to embodiments of the present invention.
Figure 7 shows a flow diagram of an optical detection method according to other embodiments of the present invention.

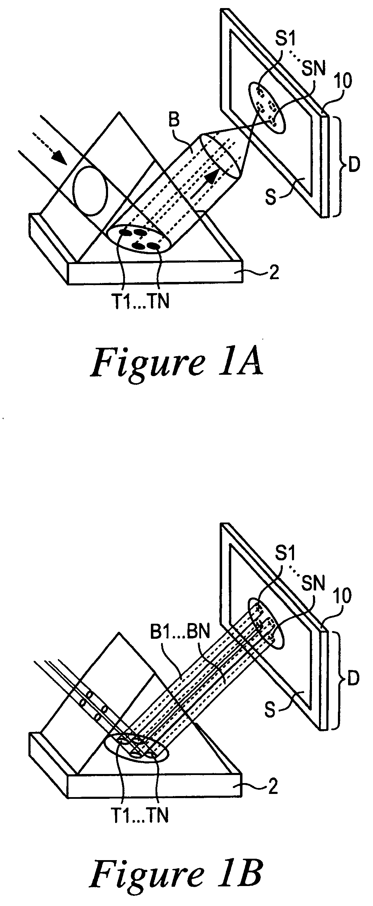

Figures 1A-1B show perspective views of multiplexed optical detectors D according to the embodiments of the present invention. Each multiplexed optical detector D includes a set of optical sensors S coupled to a multiplexer 10. The multiplexer 10 is typically implemented using BiCMOS semiconductor processes and structures, although the multiplexer 10 is alternatively implemented using any suitable substrates or processes.

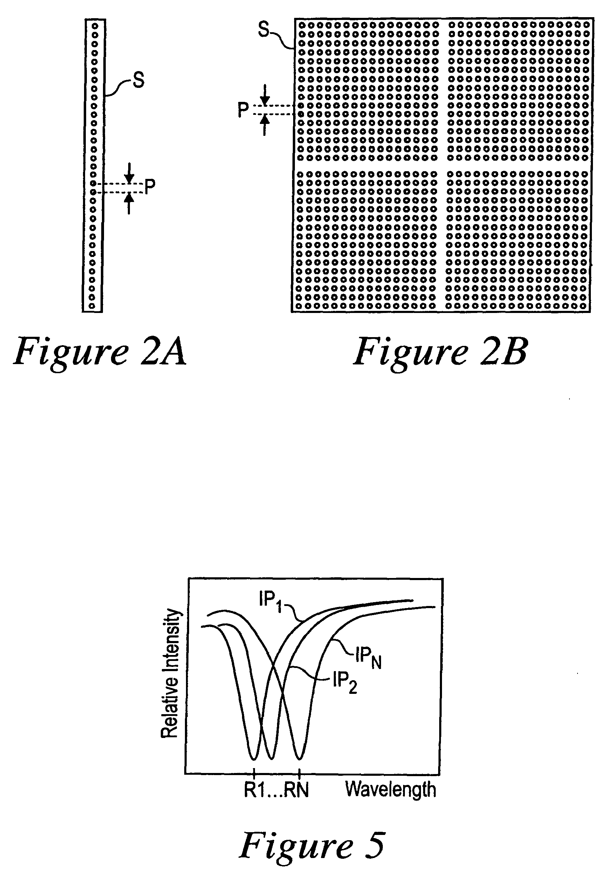

The set of optical sensors S in the multiplexed optical detector D is arranged in a one-dimensional array as shown in Figure 2A, or in a two-dimensional array as shown in Figure 2B. In an example used to illustrate the embodiments of the present invention, the set of optical sensors S includes a two-dimensional array of sixteen thousand optical sensors that have a physical spacing, or pitch P, of approximately sixty microns. However, the multiplexed optical detector D can include other numbers or arrangements of optical sensors. When the multiplexed optical detector D is used in surface plasmon resonance (SPR) sensing, one or more optical beams B deflected from an SPR sensor 2 illuminate some of the optical sensors S within the multiplexed optical detector D. Subsets of the optical sensors S that are illuminated can be associated with samples T1-TN in the SPR sensor 2 and then used to establish intensity profiles for the samples T1-TN.

Figure 1A shows an optical beam B intercepted by the multiplexed optical detector D. Particular spatial locations within the optical beam B, defined by subsets S1-SN of optical sensors S, are associated with particular samples T1-TN within the SPR sensor 2 that are imaged onto the multiplexed optical detector D. The subsets S1-SN detect the intensity of the optical beam B at the particular spatial locations associated with particular samples T1-TN. Intensity profiles for the samples T1-TN can be established using the multiplexed optical detector D by selectively detecting the intensities of the optical beam B with the subsets S1-SN of optical sensors S as the wavelength of the optical beam B is swept.

Figure 1B shows multiple optical beams B1-BN deflected from an SPR sensor 2 illuminating some of the optical sensors within the set of optical sensors S. Each of the optical beams B1-BN is associated with a corresponding one of the samples T1-TN within the SPR sensor 2. The optical sensors illuminated by the optical beams B1-BN define subsets S1-SN that detect the intensities of the optical beams B1-BN. Intensity profiles IP₁-IP_{N} for the samples T1-TN can be established using the multiplexed optical detector D by selectively detecting the intensities of the optical beams B1-BN with the subsets S1-SN of optical sensors S as the wavelengths of the optical beams B1-BN are swept.

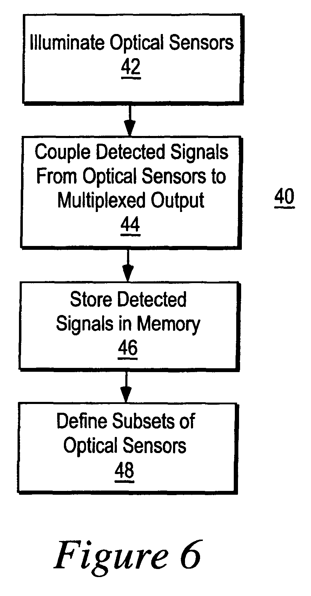

The intensity profiles IP₁-IP_{N} established using the multiplexed optical detector D (shown in the exemplary plots of Figure 5) can be used to identify resonant wavelengths R1-RN that are used to measure shifts in refractive indices that indicate presence of biological analytes or biomolecular interactions in the samples T1-TN within the SPR sensor 2. Optical systems used in SPR sensing are described in a variety of references, including *Surface Plasmon Resonance Biosensors,* Jiri Homola, Sinclair S. Yee, David Myszka, (Elsevier Science B.V., 2002), Chapter 7, pages 207-247. For the purpose of illustration, the multiplexed optical detector D is described in the context of SPR sensing, wherein an optical beam B illuminates the set of optical sensors S included in the multiplexed optical detector D. However, the following description is also applicable to multiplexed optical detectors D used in the configuration of Figure 1B or used in other optical measurement systems wherein one or more optical beams illuminates the set of optical sensors S.

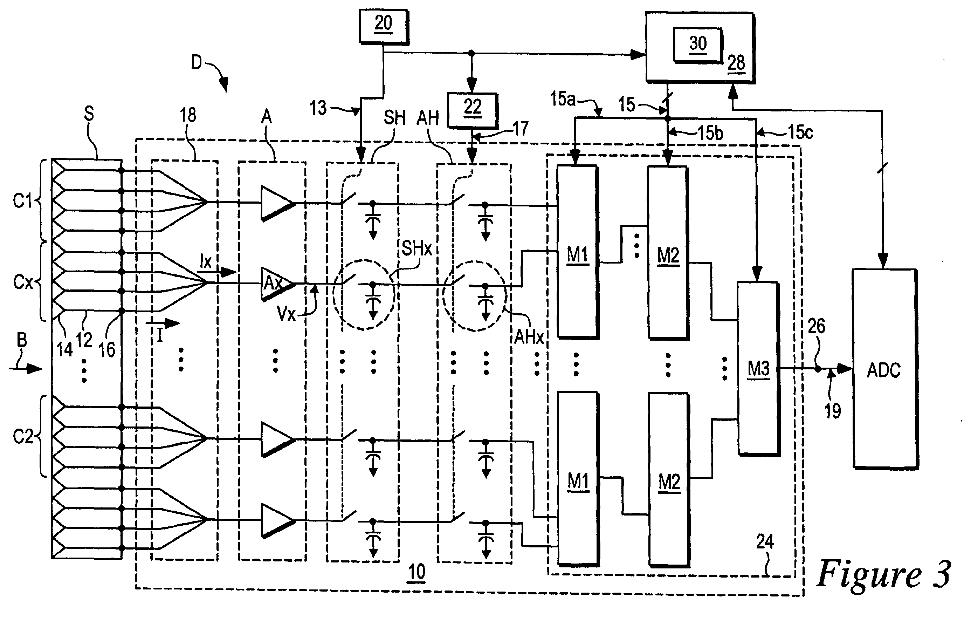

Figure 3 shows a block diagram of the multiplexed optical detector in accordance with the embodiments of the present invention. The optical sensors S included in the multiplexed optical detector D are typically InGaAs devices, silicon photodiodes, charge-coupled devices, or CMOS optical detectors. The optical sensors S are alternatively any other transducers suitable for converting optical signals, such as intercepted optical beams B, into corresponding electrical signals, such as currents I. Each optical sensor 12 in the set of optical sensors S has an optical receiving portion 14 and an output 16. For clarity, the optical receiving portion 14 and the output 16 of only one optical sensor 12 are indicated with element reference designators.

The outputs 16 are electrodes, conductive pads, ball bonds, solder bumps, or other types of electrical contacts. Collectively, the sensor outputs 16 are arranged in a grid, array, or other configuration that provides a suitable interface for an input section 18 of the multiplexer 10 that has multiple input contacts. In one embodiment, groups of the input contacts are hard-wired together in the input section 18 to define clusters Cx of optical sensors. In the example where the multiplexed optical detector D includes sixteen thousand optical sensors, hard-wired groups of input contacts define clusters Cx of four optical sensors 12 to provide an appropriate trade-off between spatial resolution of the multiplexed optical detector D and complexity of the circuitry of the multiplexer 10. However, alternative embodiments of the present invention include hard-wired groups of input contacts that define clusters of one or more optical sensors 12.

The input section 18 of the multiplexer 10 couples the clusters of optical sensors S to multiple amplifiers A in a parallel configuration. Typically, the amplifiers A are transimpedance amplifiers that convert currents Ix or other detected signals provided by the clusters Cx of optical sensors 12 to a corresponding detected signal, such as a voltage Vx. The subscript "x" of the element reference designators is an integer variable that is used to refer to any particular one of the clusters Cx of optical sensors 12 in the set of optical sensors S, the current Ix provided by the cluster Cx, and any particular one of the amplifiers Ax and the voltage Vx provided by the particular amplifier Ax. Accordingly, the cluster Cx represents any of the clusters of optical sensors 12, and the amplifier Ax represents the one of the amplifiers A that is coupled to the cluster Cx. In the example where the multiplexed optical detector D includes sixteen thousand optical sensors and where the clusters Cx include four optical sensors 12, the multiplexer includes four thousand amplifiers A. The voltage Vx provided by each amplifier Ax is the detected signal that represents the intensity of the optical beam B illuminating the cluster Cx of the optical sensors 12.

In the example where the multiplexed optical detector D includes four thousand amplifiers A, the multiplexer 10 includes four thousand sample-and-hold circuits SH. The sample-and-hold circuits SH are strobed by a timing signal 13, typically provided by a clock 20 or other suitable timing source. The sample-and-hold circuits SH are coupled to corresponding analog hold circuits AH in a parallel configuration. In the example where there are four thousand sample-and-hold circuits SH, the multiplexer 10 includes four thousand analog hold circuits AH. The analog hold circuits AH are strobed by the timing signal 13, as delayed by a delay element 22 to form a delayed timing signal 17.

The analog hold circuits AH are coupled to the inputs to a bank of programmable switches 24. In one embodiment, the bank of programmable switches 24 includes a first series of analog multiplexers M1 in a parallel arrangement. Each analog multiplexer M1 in the first series provides eight-to-one multiplexing. The bank of programmable switches 24 also includes a second series of analog multiplexers M2 in a parallel arrangement. Each analog multiplexer M2 in the second series provides eight-to-one multiplexing. The bank of programmable switches 24 also includes a third series of analog multiplexers M3 in a parallel arrangement. Each analog multiplexer M3 in the third series provides eight-to-one multiplexing. In the example wherein the multiplexer 10 includes four thousand sample-and-hold circuits SH, the first series of analog multiplexers M1 includes five hundred analog multiplexers M1, the second series of analog multiplexers M2 includes sixty-three analog multiplexers M2 and the third series of analog multiplexers M3 includes one analog multiplexer M3. In the multiplexer 10 shown in Figure 3, the bank of programmable switches 24 provides one multiplexed output 26. According to alternative embodiments of the present invention, the multiplexer 10 includes analog multiplexers or other programmable switches that provide other than eight-to-one multiplexing, that are in alternative configurations, or that provide one or more multiplexed outputs 26.

The bank of programmable switches 24 provides mappings between clusters Cx of optical sensors 12 at designated physical locations in the set of optical sensors S and the multiplexed output 26, that can be configured according to selectable addresses 15 provided to the bank of programmable switches 24 by a processor 28. In the embodiment of the present invention wherein the bank of programmable switches 24 includes the first series of analog multiplexers M1, the second series of analog multiplexers M2, and the third series of analog multiplexers M3, each address 15 provided by the processor 28 includes an address 15a to select an input of one analog multiplexer M1 in the first series of analog multiplexers M1, an address 15b to select the input of the analog multiplexer M2 in the second series of analog multiplexers M2 that is coupled to the output of the analog multiplexer M1 addressed in the first series, and an address 15c of the input of the analog multiplexer M3 in the third series of analog multiplexers M3 that is coupled to the output of the analog multiplexer M2 addressed in the second series.

The mapping provided by the bank of programmable switches 24 is a selective coupling of designated ones of the analog hold circuits AH to the multiplexed output 26, designated according to the addresses 15 that are provided by the processor 28 to the bank of programmable switches 24. For example, providing the address to the bank of programmable switches 24 that corresponds to the cluster Cx directs the voltage Vx stored in the analog hold circuit AHx to the multiplexed output 26 of the multiplexer 10. Selecting the address to the bank of programmable switches 24 that corresponds to the cluster Cy (not shown) directs a voltage Vy (not shown) stored in the analog hold circuit AHy (not shown) to the multiplexed output 26 of the multiplexer 10, and so on.

The multiplexed output 26 is typically coupled to a data acquisition system, signal digitizer, or other type of analog-to-digital converter ADC. In the embodiment of the present invention shown in Figure 3, the bank of programmable switches 24 provides one multiplexed output 26, and one analog-to-digital converter ADC is shown coupled to the one multiplexed output 26. In embodiments wherein the multiplexer 10 includes an arrangement of analog multiplexers M1, M2, M3 that provides multiple multiplexed outputs (not shown), multiple analog-to-digital converters ADC are typically coupled to the multiplexed outputs in a parallel configuration for digitizing multiplexed signals present at each of the multiplexed outputs.

The multiplexed optical detector D is suitable for detecting the intensity of optical beams B in a variety of optical systems. Detecting optical intensity typically includes shifting a detected signal provided by the optical sensors 12, such as the voltages from the sample-and-hold circuits SH, into the analog hold circuits AH, and then selectively coupling designated ones of the analog hold circuits AH to the multiplexed output 26 according to the addresses 15 provided by the processor 28. The voltages provided at the multiplexed output 26 over time form the multiplexed signal 19. In typical applications of the multiplexed optical detector D, the multiplexed signal 19 is digitized and further processed.

Operation of the multiplexed optical detector D can be tailored to the optical system in which the multiplexed optical detector D is used. For the purpose of illustration, the operation of the multiplexed optical detector D is described in the context of SPR sensing. In SPR sensing, wavelengths of one or more optical beams illuminating an SPR sensor 10 are swept over a designated wavelength range in a designated time interval. For example, the wavelength of an optical beam B can be swept over a wavelength range from 1500 nm to 1600 nm in a time interval of 1.5 seconds. Intensity of the optical beam B illuminating the optical sensors is detected by the multiplexed optical detector D as the wavelength of the optical beam B is swept. To achieve a measurement resolution of 100 picometers in this example, one thousand measurements that are equispaced in wavelength are acquired over the 100 nm wavelength range.

In a typical measurement acquisition, the timing signal 13 strobes the sample-and-hold circuits SH at time intervals of 1.5 ms, as defined by the cycles of the timing signal 13. The delayed timing signal 17 strobes the analog hold circuits AH, also at time intervals of 1.5 ms, defined by the cycles of the delayed timing signal 17. According to each strobe, or cycle, of the timing signal 13 the switches in the sample-and-hold circuits SH are closed to charge the capacitors within the sample-and-hold circuits SH, while switches in the analog hold circuits AH are open. Once the capacitors within the sample-and-hold circuits SH are charged, the switches within the sample-and-hold circuits SH are opened and switches within the analog hold circuits AH are closed by the delayed timing signal 17 to charge the capacitors within the analog hold circuits AH. Once the capacitors within the analog hold circuits AH are charged, the switches within the analog hold circuits AH are opened to isolate the sample-and-hold circuits SH from the analog hold circuits AH. This switching sequence provides isolation between the sample-and-hold circuits SH and the bank of programmable switches 24, and provides for the shifting of voltages on the sample-and-hold circuits SH to the analog hold circuits AH. The switching sequence is repeated within each cycle of the timing signal 13, which in this example is each 1.5 ms.

Within each cycle of the timing signal, or each 1.5 ms time interval in this example, the processor 28 provides a predetermined set of addresses 15, sequentially, to the bank of programmable switches 24. According to the set of addresses 15, designated ones of the analog hold circuits AH are sequentially coupled to the multiplexed output 26. This enables the voltages on the designated analog hold circuits AH to be selectively provided at the multiplexed output 26. Different ones of the analog hold circuits AH selectively coupled to the multiplexed output 26 can be designated by changing the addresses included in the predetermined set of addresses 15.

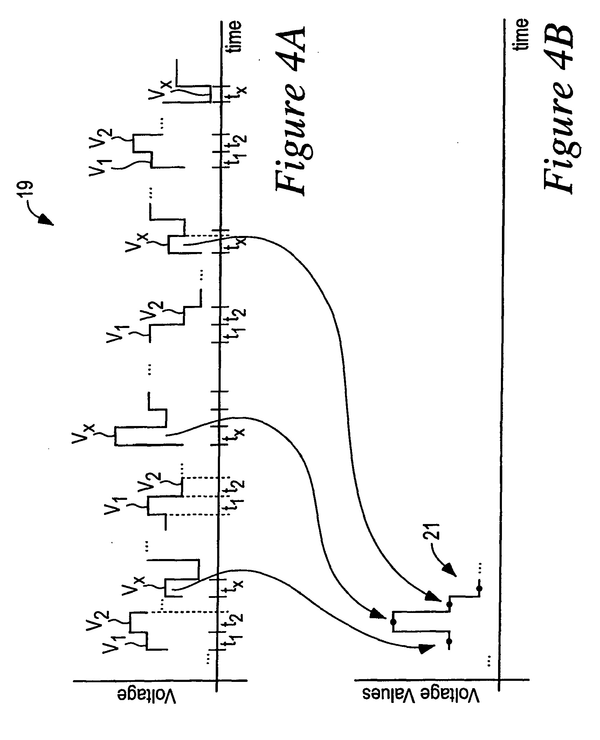

A multiplexed signal 19 provided at the multiplexed output 26 is shown in the exemplary plot of Figure 4A. Voltages V1, V2...Vx, etc. within time intervals t1, t2...tx within the multiplexed signal 19 represent the intensity of optical beams B incident on the corresponding clusters of optical sensors 12 that are selectively coupled to the multiplexed output 26 via the addresses 15. For example, a voltage V1 within a time interval t1 represents the intensity of an optical beam incident on a first cluster, for example cluster C1, a voltage V2 within the time interval t2 represents the intensity of an optical beam incident on a second cluster, for example cluster C2, a voltage Vx within the time interval tx represents the intensity of an optical beam incident on a cluster Cx, and so on. The sequence of time intervals t1, t2...tx etc. within the multiplexed signal 19 also repeat each cycle of the timing signal 13, or each 1.5 ms in this example, although the voltages V1, V2...Vx etc. within each time interval t1, t2...tx etc. typically vary from cycle to cycle of the timing signal 13.

In SPR sensing, the clusters Cx of optical sensors 12 that are selectively coupled to the multiplexed output 26 according to the predetermined set of addresses 15 typically comprise a small percentage of the total number of optical sensors S in the multiplexed optical detector D. This enables the intensities of optical beams intercepted by the multiplexed optical detector D to be detected at a high rate, for example by increasing the frequency of the clock 20. In addition, since the selective coupling of the clusters C1, C2, Cx of optical sensors S are selectively coupled to the multiplexed output 26 according to the addresses 15 provided to the bank of programmable switches 24 in the multiplexer 10, the subsets S1-SN of optical sensors 12 can be arbitrarily sequenced or arranged within the set of optical sensors S. Thus, because the subsets S1-SN of optical sensors 12 are individually addressable according to the addresses provided by the processor 28, the subsets S1-SN can form any spatial arrangement, including spatial arrangements that conform to the optical beams received by the set of optical sensors S, and spatial arrangements wherein the subsets S1-SN are not contiguous.

The multiplexed signal 19 can be further processed by systems or components coupled to the multiplexed output 26, depending on the type of optical system within which the multiplexed optical detector D is included. In one example, the multiplexed signal 19 is digitized and then demultiplexed to provide a demultiplexed signal 21 as shown in the exemplary plot of Figure 4B. Digitizing the multiplexed signal 19 typically includes converting the voltages V1, V2...Vx etc. into corresponding voltage values. Demultiplexing typically involves storing the voltage values of the digitized voltages corresponding to each time interval in a buffer or other memory 30 for each cycle of the timing signal 13. Designated memory locations in the memory 30 contain the voltage values and correspond to the time intervals within the multiplexed signal 19. The time intervals, in turn, correspond to clusters of optical sensors 12 at the particular physical locations determined by the set of addresses 15 selected by the processor 28. The voltage values are read from the memory locations in a sequence that demultiplexes the multiplexed signal 19 to form the demultiplexed signal 21. Since the voltage values represent detected optical intensities and the memory locations represent optical sensors at particular physical locations in the set of optical sensors S, the demultiplexed signal 21 can be used to establish the intensity of optical beams detected by predesignated clusters of optical sensors 12 as a function of time. When the wavelengths of the optical beams are swept within a designated time interval, as they are in SPR sensing, the intensity of the optical beams detected by the clusters of optical sensors at predetermined locations on the multiplexed optical detector D can be established as a function of wavelength. When other attributes, such as angle of incidence of the optical beams on the SPR sensor 2, are varied as a function of time or varied within a designated time interval, other types of intensity profiles associated with samples T1-TN of the SPR sensor 2 can be established.

In SPR sensing, multiple clusters of optical sensors 12 are typically formed into the subsets S1-SN of optical sensors S that are associated with the samples T1-TN of the SPR sensor 2, as shown in Figures 1A-1B. When the demultiplexed signals 21 that correspond to the clusters of optical sensors 12 within each one of the subsets are summed, averaged, or otherwise processed, intensity profiles IP₁-IP_{N} (shown in the exemplary plots of Figure 5) for each of the samples T1-TN can be established.

The predetermined set of addresses 15 that are provided to the bank of programmable switches 24 are established in various ways. In one example, the set of addresses 15 is established according to a preselection method 40 shown in the flow diagram of Figure 6. In the preselection method 40, the set of optical sensors S is illuminated by one or more optical beams, such as an optical beam B that is deflected from an SPR sensor 2 (step 42). While only some of the optical sensors 12 in the set of optical sensors S are illuminated by the optical beam B, the detected signals from each of the optical sensors 12 are applied to the sample-and-hold circuits SH and the analog hold circuits AH. The detected signals, represented for example as the voltages provided by the amplifiers A, are then sequentially coupled to the multiplexed output 26 (step 44). The voltages are digitized by the analog-to-digital converter ADC and the resulting voltage values are then stored in memory 30 (step 46).

The subsets S1-SN are then defined (step 48) based on the voltage values that result from the illumination by the optical beam B. In one example, the subsets S1-SN of the set of optical sensors S are defined by displaying the contents of the memory 30 on a computer display or other output device (not shown), and then selecting memory locations corresponding to the clusters of optical sensors 12 through a user interface (not shown) based on brightness or other characteristics observed on the output device. Software tools, such as LabView Vision Assistant, available from National Instruments Corp. in Austin, Texas, USA, are suitable for displaying the contents of the memory 30 and for selecting clusters of optical sensors 12 at designated physical locations within the set of optical sensors S.

In another example, the subsets S1-SN of optical sensors S are selected automatically based on the magnitude of the voltage values stored in the memory 30. If the wavelength of the optical beam B applied to the SPR sensor 2 is set close to the resonant wavelength R1-RN of the samples T1-TN (shown in Figure 5), the clusters of optical sensors S illuminated by the optical beam B provide detected signals with higher magnitudes than the detected signals provided by the clusters of optical sensors 12 that are not illuminated by the optical beam B. The clusters of optical sensors 12 that are not associated with the samples T1-TN have lower magnitudes than the detected signals provided by adjacent clusters of optical sensors 12 illuminated by the optical beam B. The set of addresses 15 that define the subsets S1-SN of optical sensors S is determined based on the memory locations that store the voltage values that have magnitudes within a designated range.

Additional or alternative criteria can be used to establish the set of addresses 15 used to define the subsets S1-SN of optical sensors 12. For example, the set of addresses 15 defining the subsets S1-SN of optical sensors 12 can be selected to exclude optical sensors 12 that have dark currents outside of a specified range, excessive leakage from other optical sensors 12, shorted outputs 16, or other defects in the set of optical sensors S or the multiplexer 10. The set of addresses 15 can also be selected to exclude undesired characteristics that result from the optical path traversed by the optical beams received by the set of optical sensors S.

The block diagram shown in Figure 3 indicates the various elements within the multiplexed optical detector D. Implementations of the block diagram can include various levels of integration. For example, the set of optical sensors S and the multiplexer 10 can comprise an integrated circuit, or these elements can be separate. Similarly, the multiplexer 10 can be implemented with some or all of the processor 28, memory 30, clock 20, delay element 22 and bank of programmable switches 24 integrated on an integrated circuit.

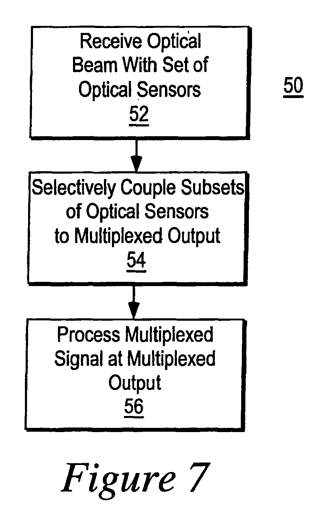

Figure 7 is a flow diagram of an optical detection method 50 according to alternative embodiments of the present invention. In step 52 of the optical detection method 50, the one or more optical beams B are received by the set of optical sensors S. Defined subsets S1-SN of the set of optical sensors S are selectively coupled to the multiplexed output 26 of the multiplexed optical detector D via the predetermined set of addresses 15 provided by the processor 28 (step 54). In optionally included step 56, the multiplexed signal 19 provided at the multiplexed output 26 is further processed to establish intensity profiles IP1-IPN of the one or more optical beams B received by the set of optical sensors S.

While the embodiments of the present invention have been illustrated in detail, it should be apparent that modifications and adaptations to these embodiments may occur to one skilled in the art without departing from the scope of the following claims.

The disclosures in United States patent application No. 10/903,934, from which this application claims priority, and in the abstract accompanying this application are incorporated herein by reference.

## Claims

1. A multiplexed optical detector, including:
a set of optical sensors (5); and
a multiplexer (10), coupled to the set of optical sensors (5), selectively coupling detected signals provided by one or more subsets of the optical sensors to at least one multiplexed output (16), the one or more subsets of the optical sensors (5) configurable according to a predetermined set of addresses provided to the multiplexer.

2. An optical detector according to claim 1, wherein the multiplexer (10) includes a bank of programmable switches (24) providing the at least one multiplexed output and receiving the predetermined set of addresses.

3. An optical detector according to claim 1 or 2, wherein the predetermined set of addresses is established based on illuminating the set of optical sensors (5) with one or more optical beams.

4. An optical detector according to claim 3, wherein the one or more optical beams are deflected from an SPR sensor (2) prior to illuminating the set of optical sensors (5).

5. A multiplexed optical detector including:
a set of optical sensors (5), wherein optical sensors (5) within the set provide corresponding detected signals in response to illumination of the set of optical sensors by one or more optical beams; and
a multiplexer (10) coupled to the set of optical sensors, selectively coupling predesignated ones of the detected signals to at least one multiplexed output of the multiplexer according to a predetermined set of addresses provided to the multiplexer.

6. An optical detector according to claim 5, wherein the predetermined set of addresses provided to the multiplexer define one or more subsets of optical sensors within the set of optical sensors (5).

7. An optical detection method, including:
receiving one or more optical beams with a set of optical sensors (5), the optical sensors (5) providing corresponding detected signals in response to the received one or more optical beams; and
selectively coupling designated ones of the detected signals to at least one multiplexed output of a multiplexer (10) according to a set of addresses provided to the multiplexer.

8. A method according to claim 7, wherein the set of addresses provided to the multiplexer (10) define one or more subsets of optical sensors within the set of optical sensors (5).

9. An optical detector or method according to claim 3, 6 or 7, wherein the one or more optical beams have corresponding wavelengths that are swept over a predesignated wavelength range within a predesignated time interval.

10. An optical detector or method according to claim 9, wherein addresses within the predetermined set of addresses are sequentially provided to the multiplexer (10) multiple times within the predesignated time interval.

11. An optical detector method according to any preceding claim, wherein the one or more optical beams illuminating the set of optical sensors are deflected from an SPR sensor (2).
